# EUROPEAN PATENT SPECIFICATION

(11) **EP 2 038 019 B1**
(45) Date of publication and mention of the grant of the patent: **17.08.2011**
(21) Application number: 06765797.3
(22) Date of filing: 20.06.2006
(51) Int. Cl.: A62D 3/00

(54) **METHOD AND PLANT FOR TREATMENT OF ASBESTOS-CONTAINING WASTE MATERIALS IN SUPERCRITICAL WATER**
VERFAHREN UND ANLAGE ZUR BEHANDLUNG VON ASBESTHALTIGEN ABFALLMATERIALIEN IN ÜBERKRITISCHEM WASSER
PROCÉDÉ ET USINE DE TRAITEMENT DE MATÉRIAUX DE DÉCHETS CONTENANT DE L'AMIANTE DANS DE L'EAU SUPERCRITIQUE

(43) Date of publication of application: 25.03.2009
(73) Proprietor: S Sistemi S.A.S., 20052 Monza (IT); Università degli Studi di Genova, 16126 Genova (IT)
(72) Inventor: SERVIDA, Alberto, 20064 Gorgonzola (IT); GRASSI, Simona, 20010 Inveruno (IT); NANO, Giuseppe, 20124 Milano (IT); SERVIDA, Alessandro, 20035 Lissone (IT)
(74) Representative: Autuori, Angelo
(86) International application number: PCT/IB2006/051995
(87) International publication number: WO 2007/148157

(56) References cited:
- EP-A- 1 325 766
- EP-A1- 0 898 985
- WO-A-2005/000490
- US-A1- 6 150 580

## Description

### Field of the invention

The present invention is generally applicable to waste disposal and treatment and particularly relates to a method for treatment of mainly organic matrix asbestos-containing waste, known as ACW.

### Background Art

The word asbestos defines a number of fibrous microcrystalline hydrated silicates, which are divided into the classes of amphibole-asbestos, comprising hydrated calcium, iron, sodium silicates and serpentine-asbestos, comprising the hydrated magnesium silicates.

"Asbestos", as used herein, is intended to define the silicates of Table 1.

**Table 1**

| | Mineral | | Chemical composition | |
|---|---|---|---|---|
| | CHRYSOTILE (white asbestos) | | Mg₃Si₂O₅(OH)₄ | or |
| | | 3MgO.2SiO₂.2H₂O | | |
| | CROCIDOLITE (blue asbestos) | | Na₂(Mg,Fe)₇Si₈O₂₂(OH)₂ | |
| | AMOSITE (brown asbestos) | | (Mg,Fe)₇Si₈O₂₂(OH)₂ | |
| | ANTOPHYLITE | | (Mg,Fe)₇Si₈O₂₂(OH)₂ | |
| | ACTINOLITE | | Ca₂(Mg,Fe)₇Si₈O₂₂(OH)₂ | |
| | TREMOLITE | | Ca₂Mg₅Si₈O₂₂(OH)₂ | |

Asbestos has been widely used since the beginning of the last century for countless industrial applications, due to its remarkable technological properties, such as fire resistance, heat resistance and hence its heat insulating properties, chemical resistance, sound absorption quality, flexibility, as well as low cost.

Major applications have been asbestos cement used for roofing and piping, in which asbestos is mixed with an inorganic hydraulic binder (Portland cement), asbestos board, friction materials for automotive brakes, heat or sound insulating cladding for railway cars or ships, in which asbestos is bound in an organic binder, such as resin, cellulose, asphalt.

The term "mainly organic matrix" as used herein is intended to define the presence, in the asbestos-containing waste binder, or in the ACW itself, of at least one compound of the chemistry of carbon, usually known as organic chemistry, in concentrations above 1 % by weight.

Even concentrations of a few percentage units are in fact significant and influence the asbestos-containing waste treatment process.

Table 2 shows a few non limiting examples of organic matrix asbestos-containing materials.

**Table 2**

| Group | General description | Asbestos content (%) | Matrix or binder |
|---|---|---|---|
| Paper products | Moderate temperatures | 35 - 70 | Starch |
| | Indented | 98 | Cotton and organic |
| | cardboard | | binders |
| | Millboard | 80 - 85 | Starch |
| Roofing felts | Smooth or rough surface | 10 - 15 | Asphalt |
| Paints and coatings | Roof coatings | 4 - 7 | Asphalt |
| | Air tight | 15 | Asphalt |
| Textiles | Felts | 90 - 95 | Cotton / wool |
| | Sheets | 50 - 100 | Cotton / wool |
| | Tapes | 90 | Cotton / wool |
| | Cords/ropes/yarns | 80-100 | Cotton / wool |
| Surfacing material | Sprayed- or troweled-on | 1 - 95 | Sodium silicate, |
| | | | Portland cement, |
| | | | synthetic resins |
| Friction materials | Brake pads, linings, | 30 -70 | Synthetic resins |
| | clutches | | |
| Other composite materials | Caulking putties | 30 | Linseed oil |
| | Roof putty | 10 - 25 | Asphalt |

Due to the recognized damages of asbestos to human health, in recent years use of asbestos has been banned In favor of other materials.

At present, use of asbestos is forbidden in almost all countries, whereby any extraction, import, export, sale and production of asbestos and asbestos-containing products is prohibited.

Nevertheless, huge amounts of asbestos-containing waste (ACW) deriving from products manufactured before such prohibitions are still present.

The distribution of ACW among various types of products is not known in detail. From an EPA survey conducted in 1988 in the United States, the asbestos-containing products appeared to be distributed as shown in Table 3.

**Table 3**

| Products | Percentage |
|---|---|
| Asbestos cement roofing | 28 |
| Asbestos cement pipe | 14 |
| Friction products | 26 |
| Packing and gaskets | 13 |
| Paper | 6 |
| Other products | 13 |

Assuming a similar distribution in Italy, Table 3 seems to show that the amount of organic matrix ACW from insulation products and friction materials is comparable to the amount ACW with inorganic binders from demolitions.

For the purposes of decontamination and disposal, asbestos-containing waste is classified as toxic and shall be disposed in special waste landfills. In Italy, asbestos and asbestos-containing waste are currency regulated by Law 1992 No. 257.

There are not many landfills for asbestos disposal. For example, by 31.12.2001, there were only about ten Italian landfills authorized for ACW disposal, one half of which were only authorized for asbestos cement, and the others for ACW in general. An unbalance is apparent between the disposal demand and the capacity of landfills authorized to accept asbestos-containing waste.

Therefore there arises the need of permanently destroying and stabilizing such materials.

A number of methods have been proposed in recent years for treatment of asbestos to convert it into non toxic compounds.

European Patent EP-B-344563 discloses a process for converting chrysotile into fosterite by thermal treatment in ovens at temperatures above 580°C, at which temperatures chrysotile loses its water of crystallization. Since the reaction control stage is diffusion through solid material, reaction time essentially depends on the material size. Reaction takes about 24 hours for material that has been previously ground to a size of 5 mm and a longer time for coarser ground material. This method is effective for chrysotile in pure form or with inorganic binders such as asbestos cement, but is not applicable in the presence of organic materials, due to simultaneous decomposition of the latter, which leads to gas compounds, semiliquid pitches and solid carbon residues which limit diffusion and further contain aromatic polycyclic hydrocarbons (APH) which are themselves highly toxic.

Patent US 5562585 discloses a process for treatment of chrysotile (serpentine asbestos) and amphibole asbestos by high temperature reaction in a strongly basic aqueous medium.

In this known process, the asbestos-containing material has to be first comminuted and then finely ground in water to prevent fiber dispersion, with a reagent which can release OH⁻ ions in water.

After grinding, the aqueous suspension so obtained is introduced in an autoclave where reaction is completed in about 30 minutes at a temperature of about 250°C and a pressure of 40 Bar.

One drawback of this known process is that a large amount of basic reagent (calcium or sodium hydroxide) is needed, essentially corresponding to the amount (by weight) of the asbestos to be treated. As a result, after the reaction, the suspension is strongly basis and has to be neutralized by further using a large amount of another acid reagent.

International Patent Application WO 2005/000490 discloses a method for destruction of white asbestos (chrysotile) in high concentrations in inorganic matrix ACW by hydrothermal treatment of chrysotile in supercritical water.

The process of destruction of pure chrysotile which is converted into fosterite, with simultaneous release water and silica, the latter being solubilized in the supercritical water, occurs at about 680°C, at a pressure of about 267 MPa, with asbestos reaction times, for complete destruction of asbestos, of less than 24 hours and about 3 hours.

One drawback of this known method is that it is not effective for mainly organic matrix ACW, particularly for ACW classes of products previously used for insulation and friction materials.

Such materials are in fact formed of asbestos fibers from various materials, not only chrysolite, which are mixed together and bound with resins or asphalt.

The reason for such drawback is that the presence of amounts of organic material, even in percentages of the order of 1%, leads to the formation of decomposition compounds which, besides being toxic, may affect the process of asbestos fiber destruction.

No reliable and cost-effective method is presently available for stabilizing organically bound ACW, due to the difficulty of breaking down the asbestos structure in the presence of significant amounts of such organic binders.

### Summary of the Invention

A general object of the present invention is to obviate the above drawbacks by providing a method and a plant for stabilization of primarily organic matrix asbestos-containing waste.

A further object is to provide a method for stabilization of asbestos-containing waste which is capable to stabilize such waste regardless of the concentration and type of asbestos and of the type of organic compound/s contained in the matrix.

Another object is to provide a method allowing to stabilize asbestos-containing waste without using dangerous reagents, or reagents requiring particular cautions of use.

Another object is to provide a method and a plant allowing to stabilize asbestos-containing waste by using small amounts of reagents.

These and other objects, which will be more apparent hereafter, are fulfilled by a method for destroying asbestos in primarily organic matrix asbestos-containing waste (ACW), which comprises, according to claim 1, the steps of: preparing the asbestos-containing waste; preparing a supercritical aqueous phase; allowing the asbestos contained in the asbestos-containing waste to react with the aqueous phase for a time t in an appropriate reactor at predetermined pressure P and temperature T to maintain the aqueous phase in supercritical conditions; cooling and condensing the aqueous phase flowing out of the reactor; separating said aqueous phase from any entrained solid product therein. The method is characterized by an additional step in which at least one oxidizing compound is added in a predetermined concentration C to the aqueous phase being supplied to the reactor for treatment of mainly organic matrix ACW, said pressure P being in a range from 25 to 27 MPa and said temperature T being in a range from 600°C to 650°C, for asbestos and the organic matrix to be simultaneously destroyed.

This method allow to inertize incoherent mainly organic matrix asbestos-containing waste, such as sprayed or troweled-on insulations, without dispersion of fibers in the environment.

The method and system of this invention provide the additional advantage of allowing not to account for the kind of primarily organic matrix waste to be treated, as effectiveness of treatment is independent of asbestos concentration, asbestos type and type of organic matter contained in the matrix.

### Brief Description of the Drawings

Further features and advantages of the invention will be more apparent from the following detailed description of a method and a system for stabilizing primarily organic matrix asbestos-containing waste, which is provided by way of example and without limitation with the help of the annexed drawings, in which:
**FIG. 1** is a block diagram of the semicontinuous method for inertisation of mainly organic matrix asbestos-containing waste, when hydrogen peroxide (H₂O₂) is used as an oxidant;
**FIG. 2** shows a functional diagram of the ACW inertization system as shown in FIG. 1;
**FIG. 3** shows a functional diagram of the laboratory ACW inertization plant;
**FIG. 4** shows a SEM (*Scanning Electron Microscopy*) image of an ACW sample collected from a demolished (sprayed) insulation before treatment according to this invention;
**FIG. 5** shows an EDS (*Energy Dispersive Spectrum*) for point "a" of FIG. 4;
**FIG. 6** shows a SEM image of the sample of FIG. 4 after treatment according to the invention;
**FIG. 7** shows an EDS for an average area of the sample of FIG. 6;
**FIG. 8** shows a SEM image of an ACW sample collected from an organic matrix friction material before treatment according to the invention;
**FIG. 9** shows an EDS for an average area of the sample of FIG. 8;
**FIG. 10** shows a SEM image of the asbestos sample of FIG. 8 after treatment according to the Invention;
**FIG. 11** shows an XRD (*X Ray Diffraction*) spectrum of the sample of FIG. 10;
**FIG. 12** shows a SEM image of the asbestos sample of FIG. 8 after treatment with supercritical water;
**FIG. 13** shows a XRD spectrum of the sample of FIG. 12.

### Detailed description of a few embodiments

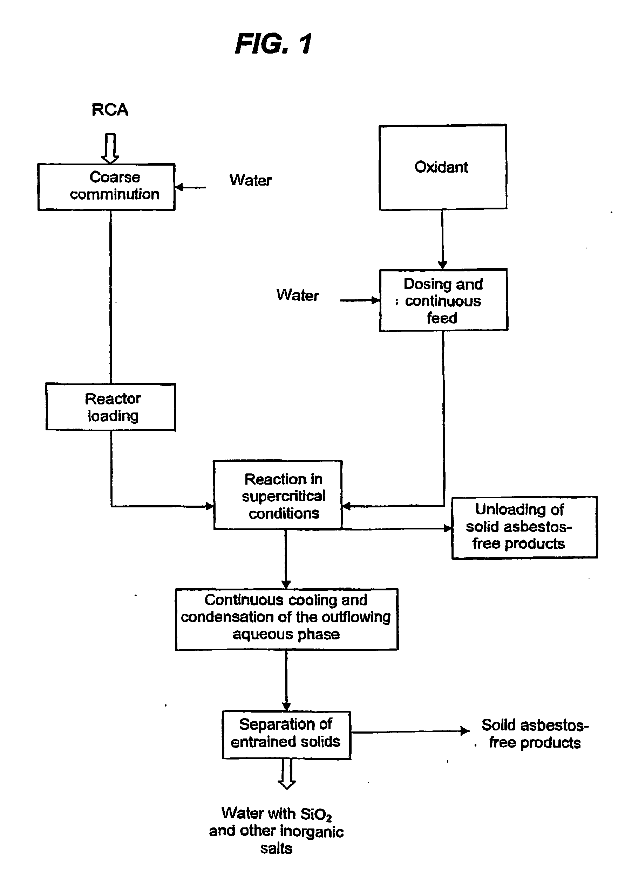

Referring to the annexed figures, there is shown a method for destroying asbestos in primarily organic matrix asbestos-containing waste (ACW) according to the invention, as shown schematically in FIG. 1.

Waste is first subjected to a preparation step a), in which they are coarsely comminuted.

Such coarse comminution is preferably carried out in the presence of water, to obtain a paste preferably having a solid matter content of not more than 30% by weight.

This prevents formation and dispersion of asbestos fibers in the operating environment, and ensures safe operation.

The wet comminuted material is then loaded in the reactor for ACW destruction.

Step b) in which the supercritical aqueous phase is prepared includes drawing of water from a storage tank and heating thereof under pressure until the critical point of water, i.e. a temperature above 374°C and a pressure above 22 MPa, is exceeded.

Then, the waste prepared in step a) and the aqueous phase prepared in step b) are supplied to a reaction step c), where the comminuted ACW remains in contact for at least a predetermined residence time t with the supercritical aqueous phase.

The reaction step c) may be carried out: In a discontinuous mode, with all reagents being added at the start of the reaction, in a continuous mode, with the reagents being continuously added to and removed from the reactor, or in a semicontinuous mode, with the waste prepared in step a) being loaded in the reactor where the reaction takes place, and the aqueous phase prepared in step b) being continuously added to and removed from the reactor.

In the first case, the residence time t is intended as the time from addition of reagents to removal of reaction products.

In the second case, the (average) residence time tᵢ of an i^{th} reagent is intended as the ratio between the volume of the reaction vessel and the flow rate of the i^{th} reagent expressed in volume per unit of time.

In the third case, the residence time t is intended as the solid reagent residence time, i.e. the time from contact of said solid reagent, pre-loaded in the reactor, with the supercritical aqueous phase to removal of solid reaction products.

According to the invention, the aqueous phase preparation step b) includes a step f) in which at least one oxidizing compound is added to said aqueous phase until a predetermined concentration C in the aqueous phase is reached. In accordance with the present invention, the oxidizing compound is selected from hydrogen peroxide (oxygenated water, H₂O₂), oxygen, oxygen-enriched air, air, ozone.

In accordance with a preferred embodiment, hydrogen peroxide is used in aqueous solution.

Conveniently, step f) is carried out before heating the aqueous phase under pressure.

The final concentration C of the oxidizing compound is of 1% to 10% by weight and preferably of 3% to 6% by weight.

According to another preferred embodiment, oxygen, air, oxygen-enriched air or ozone may be used as an oxidant. According to this embodiment, when the method is carried out in a continuous or semicontinuous mode, the oxidizing compound is added to the aqueous phase immediately before supplying the latter to the reaction system.

Suitably, in the discontinuous mode case, said gaseous oxidant is directly added to the reactor, thereby contributing to pressurization thereof.

Conveniently, ozone may be produced directly on site using an ozonizer.

The final concentration C of oxygen is of 0.4% to 4% by weight and preferably of 1.3% to 3% by weight.

The reaction step c) is carried out in a temperature range of 600°C to 650°C, in a pressure range of 25 MPa to 27 MPa and preferably with a waste residence time t of 30 to 180 minutes and more preferably of about 150 minutes.

After the residence time t, when the reaction step c) is completed, the effluent aqueous phase is first cooled and condensed to ambient temperature and atmospheric pressure and then separated from any entrained solid products therein.

Conveniently, in the continuous or semicontinuous mode cases, the supercritical aqueous phase flowing out of the reactor is cooled and condensed by a suitable heat exchanging system, in which the fresh liquid aqueous phase is preheated upstream from the reaction step c) for effective energy recovery.

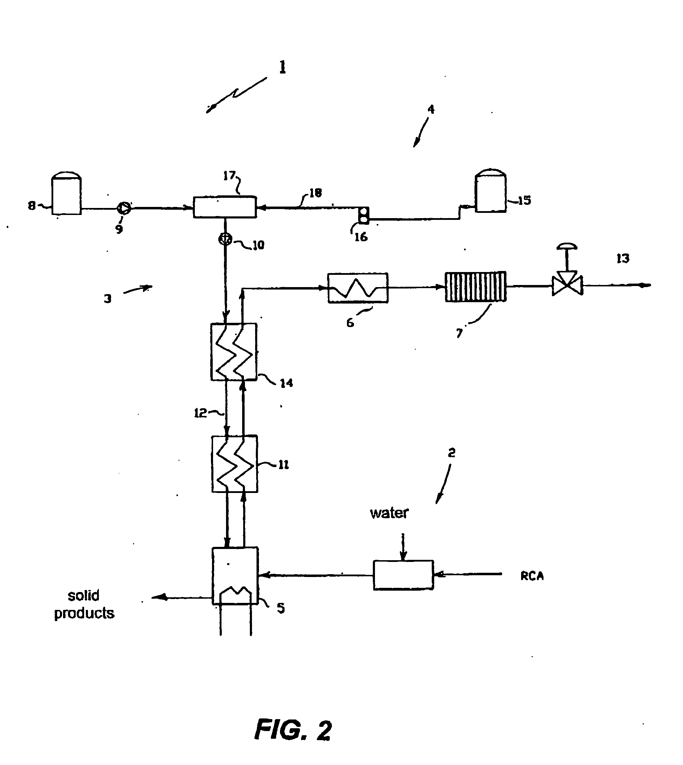

Particularly referring to FIG. 2, a plant operating in semicontinuous mode for carrying out the above method for destroying asbestos in mainly organic matrix asbestos-containing waste, generally designated by numeral 1, comprises: means 2 for preparing the asbestos-containing waste, means 3 for preparing a supercritical aqueous phase, means 4 for adding at least one oxidizing compound to the aqueous phase used for treatment to a predetermined concentration C, adapted to cause simultaneous destruction of asbestos and the primarily organic matrix in said ACW, means 5 for conducting a reaction of asbestos and the primarily organic matrix with the supercritical aqueous phase at predetermined temperature T and pressure P for a reaction time t, means 6 for cooling and condensing the aqueous phase flowing out of the reactor, means 7 for separating the aqueous phase flowing out of the reactor from any entrained solid product therein.

Particularly, the means 2 for preparing waste may be coarsely comminuting means and grinding means, both known per se by those of ordinary skill in the art.

To prevent dispersion of asbestos fibers, such means may operate in wet conditions, so as to obtain a suspension having a solid content of 20% to 50% by weight and preferably of not more than 30% by weight.

The means 3 for preparing the supercritical aqueous phase may include a water tank 8, a pump 9 for drawing water therefrom, a pressure pump 10, one or more heat exchangers 11, 14, downstream from such pressure pump, for pre-heating the liquid aqueous phase, a pipeline 12 for conveying the liquid aqueous phase and connecting equipment.

The reaction means 5 may include a heating coil, a reactor (autoclave) that can resist the operating pressure P and temperature T, and has a suitable heating and stirring system, the latter not being shown in the annexed figures, and within reach of those skilled in the art.

The means for condensing 6 and separating 7 the aqueous phase flowing out of the reactor 5 from any entrained solid products are also well known to those skilled in the art.

A pressure regulator system is provided downstream from the separating means 7, which system includes a metering valve 13 which is able to maintain the operating pressure P in a range from 25 MPa to 27 MPa in the circuit between the pressure pump 10 and the regulator 13 itself.

The system may further comprise one or more heat exchangers 11, 14 for recovering the sensible heat of the aqueous phase flowing out of the reactor by pre-heating the fresh liquid aqueous phase.

Thanks to this thermal recovery, considerable savings are achieved in operating costs.

According to a preferred embodiment, the means 4 for adding at least one oxidizing compound include a tank 15 for the liquid oxidizing reagent, e.g. a 30% hydrogen peroxide solution, a dosing pump 16, a mixer 17, a supply pipe 18.

According to another preferred embodiment, not shown in the attached drawings, the means 4 include equipment, well-known to those of ordinary skill in the art, for introducing oxygen in the reaction system, using pure oxygen or oxygen-enriched air, or air or ozone.

Suitably, if ozone is used, the means 4 include at least one ozonizer for on-site ozone generation.

Ozoners are commercially available and known to those skilled in the art.

In semicontinuous mode operation, the asbestos-containing material is comminuted, in the presence of water, in the coarse comminution system 2 and loaded in the reaction system 5.

A flow of hydrogen peroxide, dosed by a dosing pump 16 is added, using the mixer 17, to water continuously drawn from the tank 8 by the pump 9. Using the pressure pump 10 and the exchangers 11 and 14, the liquid aqueous phase containing the oxidizing component so obtained, is pre-heated and supplied, through the pipeline 12, to the reaction system 5, where it is brought to supercritical conditions, and reacts with the primarily organic matrix asbestos-containing waste.

The effluent aqueous phase is first cooled in the heat exchangers 11, 14 in counterflow with the fresh liquid aqueous phase, later condensed in the cooler 6 to ambient temperature, and then separated, in the separator 7, from any entrained solid products, to be pressure-regulated by the pressure regulator system 13.

Once the reaction Is completed, and the supply of the liquid aqueous phase has been stopped, the solid is also discharged from the reaction system.

It is apparent to those skilled in the art that the system may be adapted to also operate in wholly continuous mode or wholly discontinuous mode.

Conveniently, the above system may be made in compact form and preassembled on a load-bearing structure, to be loaded on a truck and carried to the waste location, for on-site treatment, thereby preventing transportation of dangerous, possibly incoherent waste (see the case of sprayed asbestos). Thanks to this arrangement, the risk of asbestos fiber dispersion in the environment is greatly reduced.

Non-limiting examples of execution of the inventive method will be discussed hereinbelow.

### EXAMPLE 1

One sample of mainly organic matrix waste, collected from sprayed thermal insulation of railway cars is comminuted, introduced in a special powder sample holder and characterized using SEM (*Scanning Electron Microscopy*) and XRD (*X Ray Diffraction*) techniques. Qualitative composition was determined by chemical analysis using an EDS *Energy Dispersive Spectrum*) microprobe.

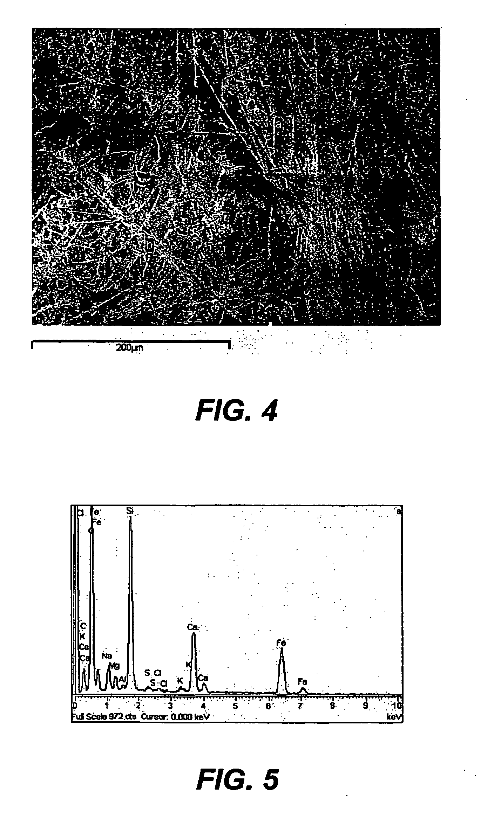

FIGS. 4 and 5 show the SEM image and the corresponding EDS spectrum respectively of the ACW sample before treatment according to the present invention.

XRD spectra show that the sample is composed of calcite (CaCO₃) and anthophyllite, an asbestos species of the amphibole class, consisting of calcium, iron, sodium and magnesium silicates.

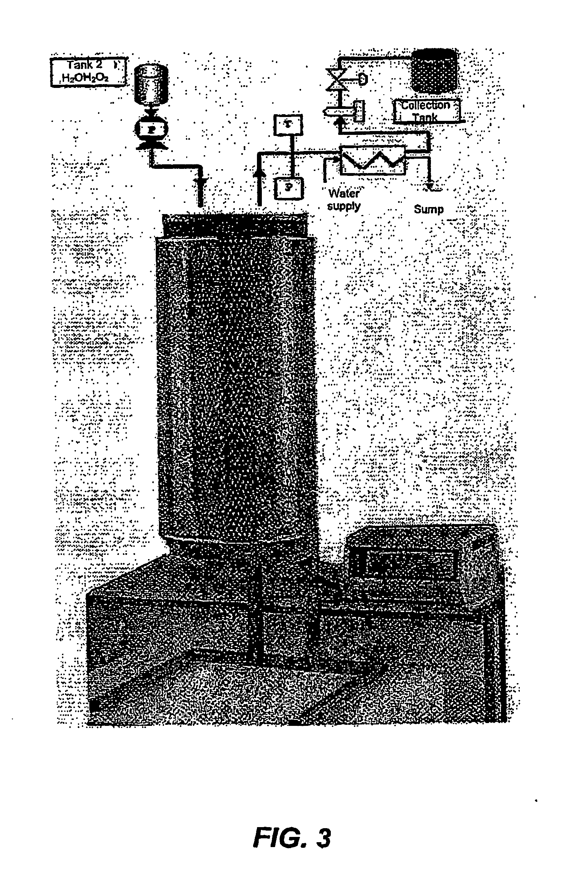

About 0.5 g of such sample, which had been wet comminuted to a coarse size, to prevent fiber dispersion, have been treated in the laboratory system as schematically shown in FIG. 3, in a semicontinuous flow mode (continuous water flow, and discontinuous solid flow) for three hours at a temperature of 650°C and a pressure of about 270 bar with an aqueous flow of 9 cm³/min of water containing 6% hydrogen peroxide by weight.

After treatment, the solid sample has been examined by SEM again, analyzed using the EDS microprobe and XRD technique to assess treatment effectiveness, as well as the presence of any crystalline materials and the nature of the latter.

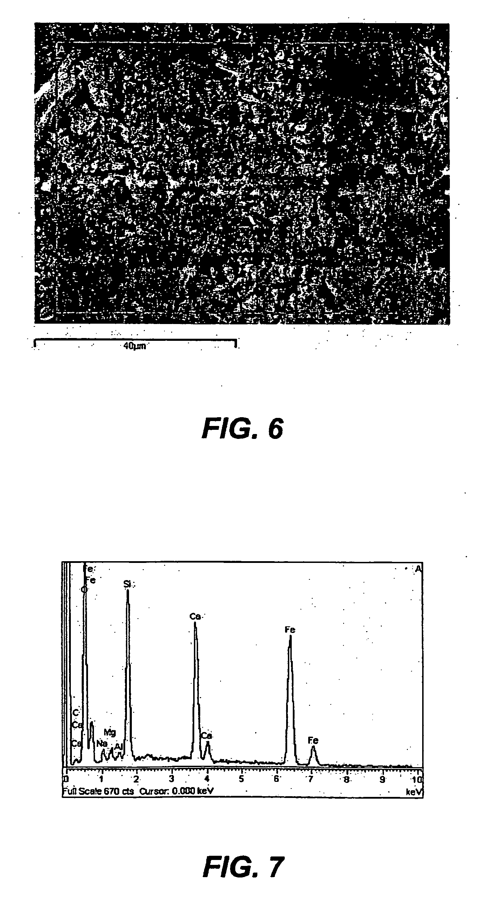

FIG. 6 shows the SEM image and FIG. 7 shows the EDS spectrum. The results shown that asbestos is no longer present in the new compound because, after treatment, the solid phase is composed of andradite (Ca₃Fe_{Z}(SiO₄)₃) and hematite (Fe₂O₃).

Particularly, the SEM image shows that no fiber is present in the treated sample.

### EXAMPLE 2

0.5 grams of a coarsely comminuted sample collected from a brake lining, made of forsterite and asbestos fibers known as chrysotile (Mg₃Si₂O₅(OH)₄), bonded in resin, have been treated in the system of FIG. 3, like in the previous example, for three hours at a temperature of 650°C and a pressure of about 270 bar, with a 9 cm³/min flow of water containing 6% hydrogen peroxide by weight.

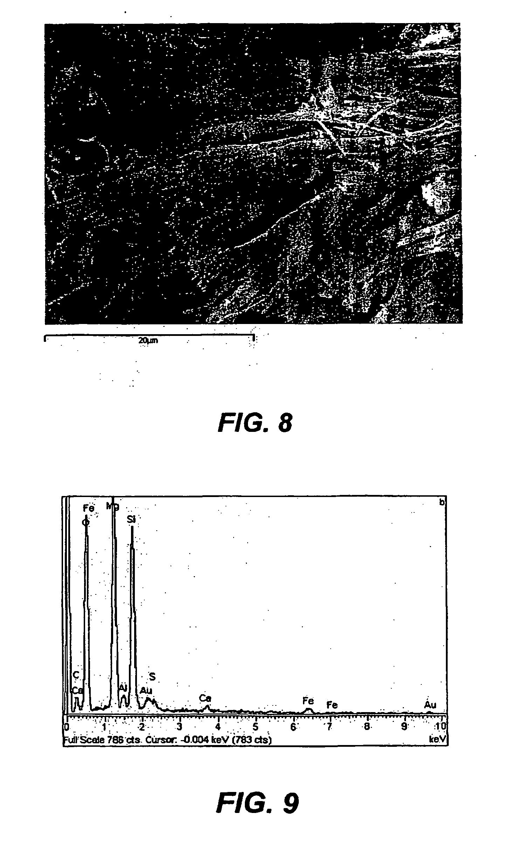

FIGS. 8 and 9 show a SEM image and the corresponding EDS spectrum respectively before treatment.

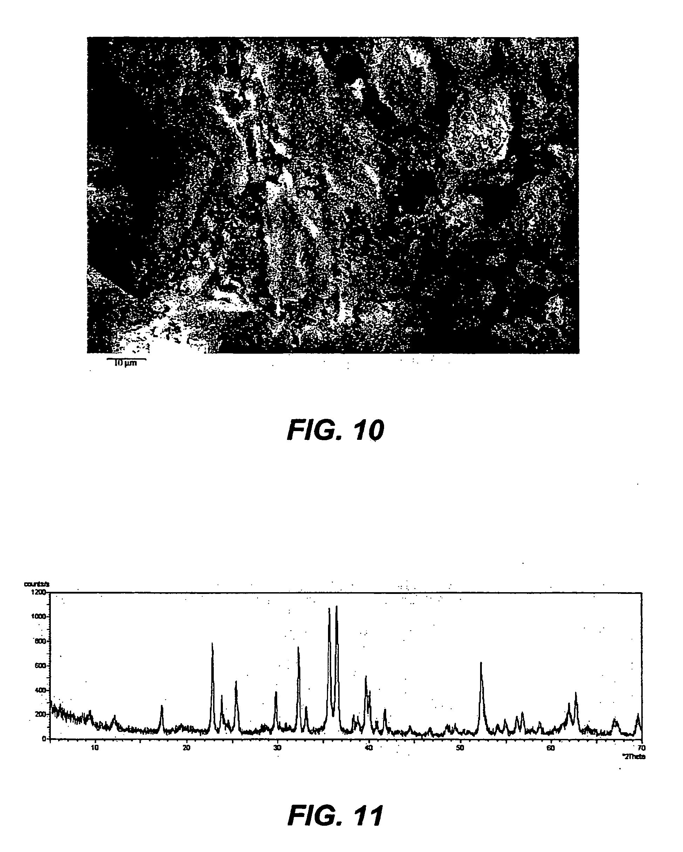

FIGS. 10 and 11 show a SEM image and the corresponding XRD spectrum respectively after treatment.

Here again, SEM images show that no asbestos fiber is present, and the XRD spectrum shows the presence of forsterite, antigorite and hematite.

### EXAMPLE 3

A sample of a brake lining, like in example 2, has been treated in the system of FIG. 3 with a 9 cm³/min flow of water containing 6% hydrogen peroxide by weight for three hours at 270 bar and 600°C.

Analyses on the treated sample (SEM, EDS and XRD) show the presence of chrysotile fibers not completely destroyed due to an excessively low treatment temperature.

### EXAMPLE 4

A sample of a brake lining, like in examples 2 and 3, has been treated in the system of FIG. 3 with a 9 cm³/min flow of simple water for three hours at 270 bar and 650°C.

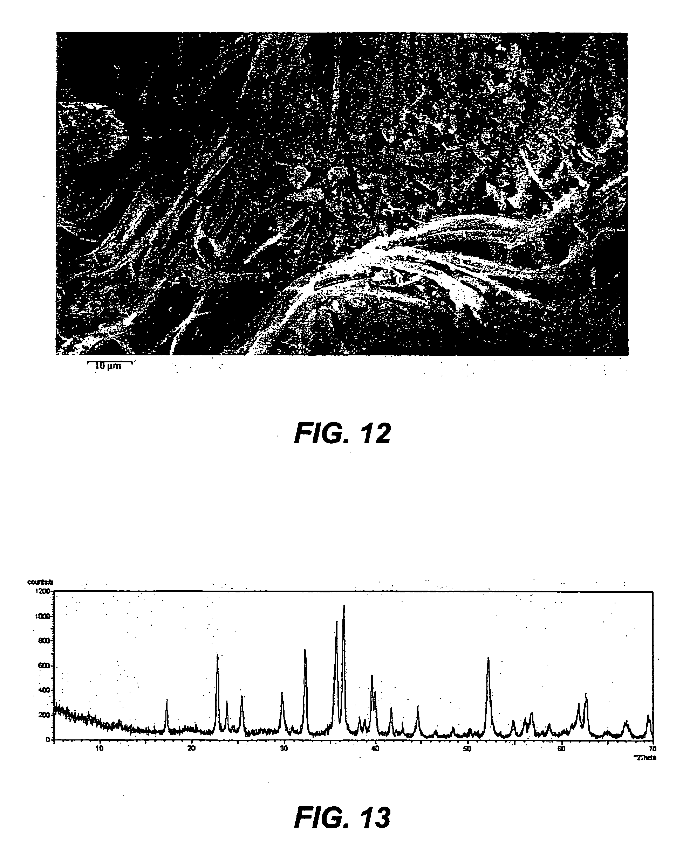

FIGS. 12 and 13 show a SEM image and the corresponding XRD spectrum respectively after treatment.

Although XRD characterization does not show any presence of asbestos, the SEM image shows the presence of incompletely destroyed asbestos fibers.

Treatment by simple supercritical water leads to the formation of a compact carbon residue, which incorporates asbestos fibers and prevents destruction thereof. The reason why XRD analysis does not detect the presence of these fibers may be that they are present in such amounts as to be undetectable by XRD instruments (below 2% by weight), although they are clearly visible in SEM images.

The use of an oxidant, leading to total destruction of CO₂ gas organic matrix, only allows asbestos destruction in primarily organic matrix ACW.

### EXAMPLE 5

An ACW sample of a brake lining, like in example 2, has been treated with a 9 cm³/min flow of water containing 3% hydrogen peroxide by weight for three hours at a temperature of 650°C and a pressure of 270 bar. The results are identical to those obtained In Example 2.

### EXAMPLE 6

An ACW sample of sprayed asbestos, like in example 1, has been treated with a 9 cm³/min flow of water containing 6% hydrogen peroxide by weight for 150 min. at a temperature of 650°C and a pressure of about 270 bar. The results are identical to those obtained in Example 1.

The above non-limiting examples have been conducted using hydrogen peroxide as an oxidant, due to its easy use in the laboratory system. However, those skilled in the art may easily understand how an industrial system may be constructed, which provides the same amount of oxygen to the reaction as the one obtained by using hydrogen peroxide, e.g. using oxygen, oxygen-enriched air, air or ozone, as oxidizing compound.

As compared with prior art methods, the method of this invention has the advantage of allowing stabilization of asbestos-containing waste, even bonded in a primarily organic matrix, at lower operating costs, due to lower operating temperatures, effective energy recovery, reduced contact times and simpler system construction.

A further advantage is that the treatment method leads to total destruction of both asbestos and the organic matrix in one cycle, and generation of inert solids, H₂O and CO₂ without using dangerous chemical reagents.

The system is highly compact and can be provided in either stationary or movable form, to allow transportation thereof on wheeled flatbeds, and avoid transportation of the ACW, thereby greatly limiting waste handling and fiber dispersion.

## Claims

1. A method for destroying asbestos in mainly organic matrix asbestos-containing waste (ACW), comprising the steps of:
a) preparing the asbestos-containing waste;
b) preparing a supercritical aqueous phase;
c) allowing reaction of asbestos and of the mainly organic matrix of the asbestos-containing waste with said aqueous phase for a time t in an appropriate reactor at predetermined pressure P and temperature T to maintain said aqueous phase in supercritical conditions;
d) cooling and condensing the aqueous phase flowing out of the reactor;
e) separating said aqueous phase from possible solid product therein;
wherein said step b) in which said aqueous phase is prepared comprises an additional step f) in which at least one oxidizing compound is added to said aqueous phase in a predetermined concentration C,
**characterized in that** said pressure P is in a range from 25 to 27 Mpa, said temperature T being in a range from 600°C to 650°C,
and **in that** said oxidizing compound is selected from oxygen, oxygen-enriched air, air, ozone and hydrogen peroxide,
wherein when said oxidizing compound is hydrogen peroxide the predetermined hydrogen peroxide concentration C is of 1% to 10% by weight; and
wherein when said oxidizing compound is selected among oxygen, oxygen-enriched air, air and ozone the predetermined oxygen concentration C is of 0.4% to 4.0% by weight,
in such a manner that the asbestos and the primarily organic matrix are simultaneously destroyed independently of asbestos concentration, asbestos type and type of organic matter contained in the matrix.

2. A method as claimed in claim 1, **characterized in that** said predetermined oxygen concentration C is of 1.3% to 3.0% by weight.

3. A method as claimed in claim 1, **characterized in that** said predetermined hydrogen peroxide concentration C is of 3% to 6% by weight.

4. A method as claimed in claim 1, **characterized in that** said time t is of 30 to 180 minutes and preferably of about 150 minutes.

5. A method as claimed in claim 1, **characterized in that** said step a) of preparation of the asbestos-containing material includes a coarse comminution step and/or a grinding step in the presence of water.

6. A method as claimed in claim 1, **characterized in that** said step is conducted at substantially ambient temperature and pressure.

7. A method as claimed in claim 1, **characterized in that** it is carried out in continuous mode.

8. A method as claimed in claim 1, **characterized in that** it is carried out in discontinuous mode.

9. A method as claimed in claim 1, **characterized in that** it is carried out in semicontinous mode, i.e. with water in continuous mode and the primarily organic matrix asbestos-containing waste in discontinuous mode.

## Patentansprüche

1. Verfahren zum Vernichten von Asbest in asbesthaltige Abfälle (AHA) mit primär organischer Matrix, umfassend die folgenden Schritte:
a) Vorbereiten der asbesthaltigen Abfälle;
b) Vorbereiten einer superkritischen wässrigen Phase;
c) Reagierenlassen des Asbests und der hauptsächlich organischen Matrix des asbesthaltigen Abfalls mit der wässrigen Phase für eine Zeit t in einem geeigneten Reaktor bei einem vorbestimmten Druck P und einer vorbestimmten Temperatur T, um die wässrige Phase unter superkritischen Bedingungen zu halten;
d) Abkühlen und Kondensieren der wässrigen Phase, die aus dem Reaktor fließt;
e) Abscheiden der wässrigen Phase von möglichen darin mitgeführten festen Produkten;
wobei Schritt b), in dem die wässrige Phase hergestellt wird, einen zusätzlichen Schritt f) umfasst, in dem mindestens eine oxidierende Verbindung in einer vorbestimmten Konzentration C zu der wässrigen Phase hinzugefügt wird,
**dadurch gekennzeichnet, dass** der Druck P in einem Bereich von 25 bis 27 Mpa liegt, die Temperatur T in einem Bereich von 600 °C bis 650 °C liegt,
und **dadurch**, dass die oxidierende Verbindung aus Sauerstoff, sauerstoffangereicherter Luft, Luft, Ozon und Wasserstoffperoxid ausgewählt ist,
wobei, wenn die oxidierende Verbindung Wasserstoffperoxid ist, die vorbestimmte Wasserstoffperoxidkonzentration C von 1 Gew.-% bis 10 Gew.-% beträgt; und
wobei, wenn die oxidierende Verbindung aus Sauerstoff, sauerstoffangereicherter Luft, Luft und Ozon ausgewählt ist, die vorbestimmte Sauerstoffkonzentration C von 0,4 Gew.-% bis 4,0 Gew.-% beträgt,
so dass der Asbest und die primär organische Matrix unabhängig von der Asbestkonzentration, der Asbestart und der Art der in der Matrix enthaltenen organischen Stoffe gleichzeitig vernichtet werden.

2. Verfahren nach Anspruch 1, **dadurch gekennzeichnet, dass** die vorbestimmte Sauerstoffkonzentration C von 1,3 Gew.-% bis 3,0 Gew.-% beträgt.

3. Verfahren nach Anspruch 1, **dadurch gekennzeichnet, dass** die vorbestimmte Wasserstoffperoxidkonzentration C von 3 Gew.-% bis 6 Gew.-% beträgt.

4. Verfahren nach Anspruch 1, **dadurch gekennzeichnet, dass** die Zeit t von 30 bis 180 Minuten und vorzugsweise etwa 150 Minuten beträgt.

5. Verfahren nach Anspruch 1, **dadurch gekennzeichnet, dass** Schritt a) der Vorbereitung des asbesthaltigen Materials einen Grobzerkleinerungsschritt und/oder einen Zermahlschritt in Gegenwart von Wasser aufweist.

6. Verfahren nach Anspruch 1, **dadurch gekennzeichnet, dass** der Schritt bei im Wesentlichen Umgebungstemperatur und -druck ausgeführt wird.

7. Verfahren nach Anspruch 1, **dadurch gekennzeichnet, dass** es in kontinuierlicher Betriebsweise ausgeführt wird.

8. Verfahren nach Anspruch 1, **dadurch gekennzeichnet, dass** es in diskontinuierlicher Betriebsweise ausgeführt wird.

9. Verfahren nach Anspruch 1, **dadurch gekennzeichnet, dass** es in semikontinuierlicher Weise ausgeführt wird, das heißt, mit Wasser in kontinuierlicher Betriebsweise und dem asbesthaltigen Abfall mit primär organischer Matrix in diskontinuierlicher Betriebsweise.

## Revendications

1. Procédé de destruction d'amiante dans des déchets contenant de l'amiante (DCA) à matrice principalement organique, qui comprend les étapes suivantes:
a) préparer les déchets contenant de l'amiante;
b) préparer une phase aqueuse supercritique;
c) laisser réagir l'amiante et la matrice principalement organique des déchets contenant de l'amiante avec ladite phase aqueuse pendant une période t dans un réacteur approprié à une pression P et une température T prédéterminées pour maintenir ladite phase aqueuse dans des conditions supercritiques;
d) refroidir et condenser la phase aqueuse s'écoulant hors du réacteur ;
e) séparer ladite phase aqueuse de possible produit solide y étant entraîné;
dans lequel ladite étape b) dans laquelle ladite phase aqueuse est préparée comprend une étape supplémentaire f) dans laquelle au moins un composé oxydant est ajouté à ladite phase aqueuse en une concentration C prédéterminée,
**caractérisé en ce que** ladite pression P est comprise dans l'intervalle de 25 à 27 Mpa, ladite température T étant comprise dans l'intervalle de 600°C à 650°C,
et **en ce que** ledit composé oxydant est choisi parmi l'oxygène, l'air enrichi en oxygène, l'air, l'ozone et le peroxyde d'hydrogène,
dans lequel lorsque ledit composé oxydant est le peroxyde d'hydrogène, la concentration C prédéterminée de peroxyde d'hydrogène est comprise dans l'intervalle de 1 % à 10 % en poids ; et
dans lequel lorsque ledit composé oxydant est choisi parmi l'oxygène, l'air enrichi en oxygène, l'air et l'ozone, la concentration C prédéterminée d'oxygène est comprise dans l'intervalle de 0,4 % à 4,0 % en poids,
de telle manière que l'amiante et la matrice principalement organique soient simultanément détruits indépendamment de la concentration d'amiante, du type d'amiante et du type de matière organique contenue dans la matrice.

2. Procédé selon la revendication 1, **caractérisé en ce que** ladite concentration C prédéterminée d'oxygène est comprise dans l'intervalle de 1,3 % à 3,0 % en poids.

3. Procédé selon la revendication 1, **caractérisé en ce que** ladite concentration C prédéterminée de peroxyde d'hydrogène est comprise dans l'intervalle de 3 % à 6 % en poids.

4. Procédé selon la revendication 1, **caractérisé en ce que** ladite période t est comprise dans l'intervalle de 30 à 180 minutes et de préférence d'environ 150 minutes.

5. Procédé selon la revendication 1, **caractérisé en ce que** ladite étape a) de préparation du matériau contenant de l'amiante comprend une étape de comminution grossière et/ou une étape de broyage en présence d'eau.

6. Procédé selon la revendication 1, **caractérisé en ce que** ladite étape est réalisée à pression et température sensiblement ambiantes.

7. Procédé selon la revendication 1, **caractérisé en ce qu'**il est réalisé en mode continu.

8. Procédé selon la revendication 1, **caractérisé en ce qu'**il est réalisé en mode discontinu.

9. Procédé selon la revendication 1, **caractérisé en ce qu'**il est réalisé en mode semi-discontinu, en d'autres termes avec l'eau en mode continu et les déchets contenant de l'amiante à matrice principalement organique en mode discontinu.
